# EUROPÄISCHE PATENTSCHRIFT

(11) **EP 1 037 487 B1**
(45) Veröffentlichungstag und Bekanntmachung des Hinweises auf die Patenterteilung: **18.06.2003**
(21) Anmeldenummer: 00105604.3
(22) Anmeldetag: 16.03.2000
(51) Int. Cl.: H04Q 7/38

(54) **Verfahren für einen Verbindungsaufbau mit einem mobilen Kommunikationsendgerät**
Method for establishing a connection to a mobile communication terminal
Procédé pour établir une connexion à un terminal de communication mobile

(30) Priorität: 17.03.1999 DE 19911940
(43) Veröffentlichungstag der Anmeldung: 20.09.2000
(73) Patentinhaber: SIEMENS AKTIENGESELLSCHAFT, 80333 München (DE)
(72) Erfinder: Berger, Harald, 33100 Paderborn (DE); Jabs, Markus, 33165 Lichtenau (DE); Scharfen, Gerhard, 33181 Wünnenberg (DE)

(56) Entgegenhaltungen:
- EP-A- 0 631 452
- EP-A- 0 707 429
- EP-A- 0 712 230
- WO-A-98/10616

## Beschreibung

Die Erfindung betrifft ein Verfahren für einen Verbindungsaufbau mit einem mobilen Kommunikationsendgerät gemäß dem Oberbegriff des Patentanspruchs 1.

Insbesondere auf dem endgerätenahen Gebiet der Telekommunikation gewinnen Funkstrecken zunehmend an Bedeutung. Schnurlose Telefone, Mobilfunkendgeräte und die drahtlose Anschlußtechnik RLL/WLL ("Radio in the Local Loop" / "Wireless in the Local Loop") sind dafür bekannte Beispiele.

Durch die drahtlose RLL/WLL-Anschlußtechnik besteht die Möglichkeit eine Datenübertragung zwischen einem Kommunikationsendgerät und einer Kommunikationsanlage über eine Funkschnittstelle, z.B. ein System nach dem DECT-Standard (Digital Enhanced Cordless Telecommunication) zu realisieren. Ein derartiges System ist z.B. aus der Produktschrift der Firma Siemens AG, "DECTlink Radio Access: Where Performance Counts" Dezember 95, Order Nr. A50001-N7-P1-1-7600 bekannt.

Der Zustand der Erreichbarkeit eines derartigen Kommunikationsendgerätes - im folgenden als DECT-Mobilteil bezeichnet - d.h. eine Information ob das DECT-Mobilteil aktuell zu erreichen ist, ist in der Kommunikationsanlage bzw. in einer an der Kommunikationsanlage angeschlossenen Basisstation nicht bekannt. Im Rahmen eines Verbindungsaufbaus mit dem DECT-Mobilteil muß somit durch die Kommunikationsanlage bzw. durch die Basisstation eine Überprüfung dahingehend erfolgen, ob das DECT-Mobilteil ausgehend von der Kommunikationsanlage bzw. von der Basisstation aktuell zu erreichen ist. Eine derartige Überprüfung kann im ungünstigsten Fall bis zu 30 Sekunden dauern.

Ein den Ruf initiierender Teilnehmer wartet in der Regel jedoch nicht 30 Sekunden bis zur Beantwortung seines Rufes, sondern beendet den Verbindungsaufbau früher, so daß keine Verbindung zwischen dem Kommunikationsendgerät des rufenden Teilnehmers und dem DECT-Mobilteil zustande kommt. Die Kommunikationsanlage bzw. die Basisstation bricht nach einer Beendigung des Rufaufbaus durch den rufenden Teilnehmer die Überprüfung automatisch umgehend ab.

Aus der europäischen Offenlegungsschrift EP 0 707 429 A1 ist ein Kommunikationssystem mit dem System zugeordneten Mobilfunk-Endgeräten bekannt. In Fällen, in denen ein eingehender Ruf nicht zu einem Mobilfunk-Endgerät durchgeschaltet werden kann, weil das Mobilfunk-Endgerät nicht antwortet, wird der eingehende Ruf in einem vordefinierten Speicher zwischengespeichert. Ändert sich der Kommunikationsstatus des Mobilfunk-Endgerätes verbindet der vordefinierte Speicher automatisch das Mobilfunk-Endgerät mit dem rufenden Endgerät.

Des weiteren ist aus der europäischen Offenlegungsschrift EP 0 631 452 A1 ein Verfahren für ein Nachrichtensystem bekannt, bei dem ein Teilnehmer temporär als nicht erreichbar erkannt wird. In diesem Fall wird ein für den Teilnehmer eingehender Ruf zurück an das Nachrichtensystem geleitet, welches eine Nachricht speichert, die zu einem späteren Zeitpunkt an den temporär nicht erreichbaren Teilnehmer übermittelt werden soll. Gemäß einer einstellbaren Rückrufmethode ruft das Nachrichtensystem automatisch den Teilnehmer an und übermittelt die Nachricht an den Teilnehmer.

Der vorliegenden Erfindung liegt die Aufgabe zugrunde, ein Verfahren anzugeben, durch welches ein höherer Komfort bei einem Verbindungsaufbau mit einem mobilen Kommunikationsendgerät, insbesondere einem DECT-Mobilteil erreicht wird.

Gelöst wird die Aufgabe ausgehend von den Merkmalen des Oberbegriffs des Patentanspruchs 1 durch dessen kennzeichnenden Merkmale.

Ein wesentlicher Vorteil des erfindungsgemäßen Verfahrens besteht nun darin, daß durch eine Weiterführung der Überprüfung trotz Rufabbruch und durch eine nachfolgende Speicherung einer, die Erreichbarkeit des mobilen Kommunikationsendgerätes bezeichnenden Information in der Kommunikationsanlage, bei später erfolgenden, das mobile Kommunikationsendgerät adressierenden Rufen eine schnelle Beantwortung des Rufes durch die Kommunikationsanlage möglich ist.

Vorteilhafte Weiterbildungen der Erfindung sind in den Unteransprüchen angegeben.

Ein Vorteil von in den Unteransprüchen definierten Ausgestaltungen der Erfindung besteht unter anderem darin, daß in Fällen, in denen das mobile Kommunikationsendgerät nicht erreichbar ist, ein an der Kommunikationsanlage eingehender Ruf an ein, dem mobilen Kommunikationsendgerät zugeordnetes Postfach weitergeleitet wird, so daß der, dem mobilen Kommunikationsendgerät zugeordnete Teilnehmer zumindest zu einem späteren Zeitpunkt über den Eingang des Rufes informiert wird.

Ein weiterer Vorteil von in den Unteransprüchen definierten Ausgestaltungen der Erfindung besteht darin, daß in Fällen, in denen das mobile Kommunikationsendgerät nicht erreichbar ist, ein an der Kommunikationsanlage eingehender Ruf an ein, dem Teilnehmer zugeordnetes weiteres Kommunikationsendgerät - beispielsweise an ein GSM-Mobilendgerät (Global System Mobile) - weitergeleitet wird, so daß der Teilnehmer trotz Nichtverfügbarkeit des mobilen Kommunikationsendgerätes permanent erreichbar ist.

Ein Ausführungsbeispiel der Erfindung wird im folgenden anhand der Zeichnung näher erläutert.

Dabei zeigen:
- Fig. 1:: ein Strukturbild zur schematischen Darstellung der beim erfindungsgemäßen Verfahren beteiligten wesentlichen Funktionseinheiten;
- Fig. 2:: ein Ablaufdiagramm zur Veranschaulichung der bei einem erfolgreichen Verbindungsaufbau ablaufenden wesentlichen Verfahrensschritte;
- Fig. 3:: ein Ablaufdiagramm zur Veranschaulichung der bei einem abgebrochenen Verbindungsaufbau ablaufenden wesentlichen Verfahrensschritte.

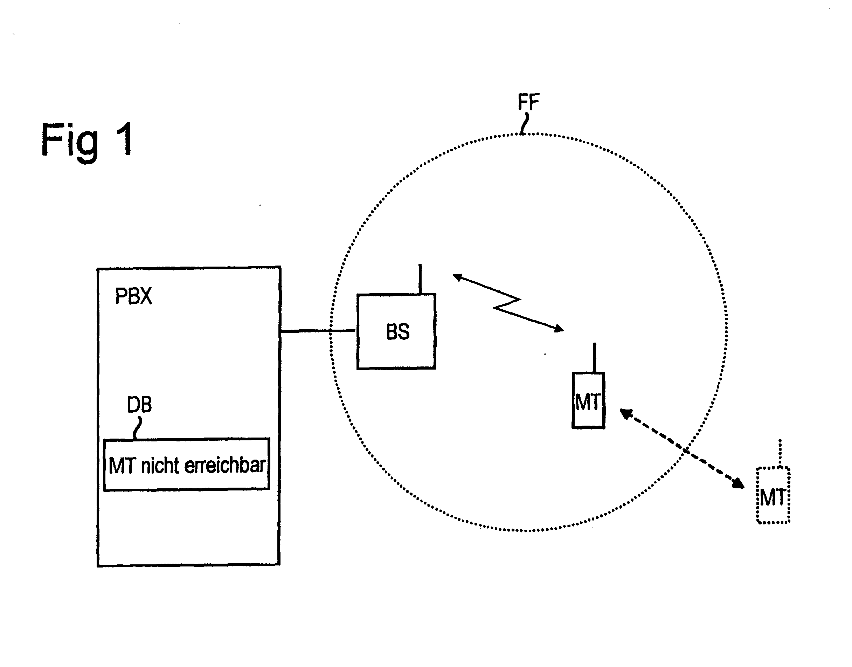

Fig. 1 zeigt eine Kommunikationsanlage PBX (Private Branche Exchange) mit einer an dieser angeschlossenen Basisstation BS. Über die Basisstation BS wird eine Datenübermittlung zwischen der Kommunikationsanlage PBX und einem, der Basisstation BS zugeordneten mobilen Kommunikationsendgerät MT realisiert. Eine Datenübermittlung zwischen der Basisstation BS und dem mobilen Kommunikationsendgerät MT erfolgt dabei gemäß dem DECT-Standard (Digital Enhanced Cordless Telecommunication).

Eine Datenübermittlung zwischen der Kommunikationsanlage PBX und dem mobilen Kommunikationsendgerät MT ist jedoch nur möglich, wenn das mobile Kommunikationsendgerät MT aktiviert ist, d.h. eingeschaltet ist und wenn sich das mobile Kommunikationsendgerät MT im Funkfeld FF der Basisstation BS befindet. Verläßt das mobile Kommunikationsendgerät MT das Funkfeld FF der Basisstation BS - durch die gestrichelte Linie und das gepunktete mobile Kommunikationsendgerät MT angedeutet - so ist keine Datenübermittlung zwischen der Basisstation BS und dem mobilen Kommunikationsendgerät MT mehr möglich.

Die Kommunikationsanlage PBX weist im vorliegenden Ausführungsbeispiel eine Datenbasis DB auf, in der endgeräteindividuelle Informationen speicherbar sind. In der Datenbasis DB ist beispielhaft eine Information "MT nicht erreichbar" gespeichert, durch die signalisiert wird, daß das mobile Kommunikationsendgerät MT aktuell über die Basisstation BS nicht erreichbar ist.

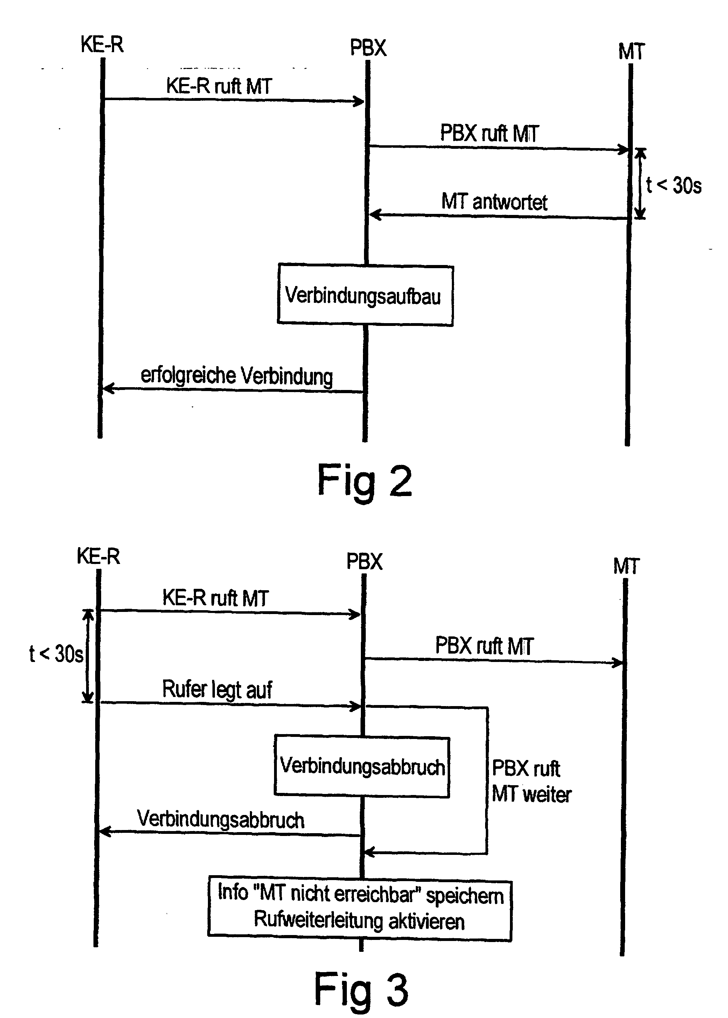

Fig. 2 zeigt ein Ablaufdiagramm mit den bei einem erfolgreichen Verbindungsaufbau zwischen einem rufenden Kommunikationsendgerät KE-R und dem mobilen Kommunikationsendgerät MT ablaufenden wesentlichen Verfahrensschritten. Geht an der Kommunikationsanlage PBX, an das mobile Kommunikationsendgerät MT adressierter Ruf ein, startet die Kommunikationsanlage PBX über die Basisstation BS eine Überprüfung dahingehend, ob das mobile Kommunikationsendgerät MT aktuell erreichbar ist, d.h. die Kommunikationsanlage PBX ruft das mobile Kommunikationsendgerät MT. Antwortet das mobile Kommunikationsendgerät MT innerhalb einer vorgegebenen Zeitspanne t, d.h. das mobile Kommunikationsendgerät ist aktiviert und es befindet sich innerhalb des Funkfeldes FF der Basisstation BS, so wird über die Kommunikationsanlage PBX in herkömmlicher Weise eine Verbindung zwischen dem rufenden Kommunikationsendgerät KE-R und dem mobilen Kommunikationsendgerät MT eingerichtet. Die vorgegebene Zeitspanne t ergibt sich dabei durch die Zeitdauer, die für die Überprüfung, ob das mobile Kommunikationsendgerät aktuell erreichbar, oder nicht erreichbar ist, benötigt wird. In der Regel werden für die Überprüfung maximal t = 30 Sekunden benötigt, so daß die Kommunikationsanlage PBX gegebenenfalls frühestens nach 30 Sekunden festgestellt hat, daß das mobile Kommunikationsendgerät MT über die Basisstation BS nicht erreichbar ist. Stellt die Kommunikationsanlage PBX nach Ablauf der Zeitspanne t fest, daß das mobile Kommunikationsendgerät MT über die Basisstation BS nicht erreichbar ist, wird der Verbindungsaufbau abgebrochen, oder der Ruf wird alternativ an ein anderes Kommunikationsendgerät weitergeleitet.

Fig. 3 zeigt ein Ablaufdiagramm mit den bei einem abgebrochenen Verbindungsaufbau zwischen einem rufenden Kommunikationsendgerät KE-R und dem mobilen Kommunikationsendgerät MT ablaufenden wesentlichen Verfahrensschritten. Geht an der Kommunikationsanlage PBX ein, an das mobile Kommunikationsendgerät MT adressierter Ruf ein, startet die Kommunikationsanlage PBX wie bereits beschrieben über die Basisstation BS eine Überprüfung dahingehend, ob das mobile Kommunikationsendgerät MT aktuell erreichbar ist. Beendet der rufende Teilnehmer innerhalb der, für die Überprüfung der Erreichbarkeit des mobilen Kommunikationsendgerätes MT benötigten Zeitspanne t - beispielsweise nach 20 Sekunden - den Verbindungsaufbau, so setzt die Kommunikationsanlage PBX die Überprüfung im Hintergrund fort bis der Status über die Erreichbarkeit des mobilen Kommunikationsendgerätes MT über die Basisstation BS bekannt ist, d.h. die Kommunikationsanlage PBX ruft das mobile Kommunikationsendgerät MT weiter. Gleichzeitig wird die Verbindung zwischen dem rufenden Kommunikationsendgerät KE-R und der Kommunikationsanlage PBX abgebrochen.

Führt die Überprüfung nach deren Abschluß zu dem Ergebnis, daß das mobile Kommunikationsendgerät MT aktuell nicht erreichbar ist, wird eine diesbezügliche Information "MT nicht erreichbar" in der Datenbasis DB der Kommunikationsanlage PBX gespeichert. Gleichzeitig wird ein Leistungsmerkmal "Rufweiterleitung" der Kommunikationsanlage PBX aktiviert.

Geht nun nachfolgend ein, das mobile Kommunikationsendgerät MT adressierender Ruf an der Kommunikationsanlage PBX ein, so wird der eingehende Ruf automatisch an ein, durch die Rufweiterleitung identifiziertes anderes Kommunikationsendgerät weitergeleitet. Besonders vorteilhaft ist hier die Ausgestaltung des mobilen Kommunikationsendgerätes MT als sogenanntes "Dual-Band-Handy", welches sowohl über die Basisstation BS mittels einer DECT-Teilnehmernummer als auch über eine GSM-Basisstation (Global System Mobile) mittels einer GSM-Teilnehmernummer adressierbar ist. Ist das mobile Kommunikationsendgerät MT über die Basisstation BS aktuell nicht erreichbar (billigere Alternative), so kann ein eingehender Ruf automatisch auf die GSM-Teilnehmernummer des mobilen Kommunikationsendgerätes MT (teurere Alternative) weitergeleitet werden.

Alternativ kann auch vorgesehen sein, im Falle einer Nichterreichbarkeit des mobilen Kommunikationsendgerätes MT durch die Basisstation BS einen an der Kommunikationsanlage PBX eingehenden Ruf an ein, dem mobilen Kommunikationsendgerät MT zugeordnetes - nicht dargestelltes - Postfach der Kommunikationsanlage PBX weiterzuleiten.

Meldet sich das mobile Kommunikationsendgerät MT - beispielsweise infolge eines Wiedereintretens des mobilen Kommunikationsendgerätes MT in das Funkfeld FF der Basisstation BS oder infolge eines Anschaltens des mobilen Kommunikationsendgerätes MT - nachfolgend an der Kommunikationsanlage PBX an, wird die Information "MT nicht erreichbar" über die Nichterreichbarkeit des mobilen Kommunikationsendgerätes MT in der Datenbasis DB der Kommunikationsanlage PBX gelöscht und die Rufweiterleitung auf das andere Kommunikationsendgerät wird deaktiviert. Ein Verbindungsaufbau mit dem mobilen Kommunikationsendgerät MT findet daraufhin wieder in herkömmlicher Weise - siehe Beschreibung zu Fig. 2 - statt.

## Patentansprüche

1. Verfahren für einen Verbindungsaufbau zwischen einer Kommunikationsanlage (PBX) und einem mobilen Kommunikationsendgerät (MT),
wobei im Rahmen des Verbindungsaufbaus durch die Kommunikationsanlage (PBX) eine Überprüfung dahingehend erfolgt, ob das mobile Kommunikationsendgerät (MT) aktuell erreichbar ist und in Fällen, in denen das mobile Kommunikationsendgerät (MT) aktuell erreichbar ist eine Verbindung zu diesem aufgebaut wird,
**dadurch gekennzeichnet,**
**daß** bei einer Beendigung des Verbindungsaufbaus durch einen rufenden Teilnehmer vor Beendigung der Überprüfung, die Überprüfung bis zu einem Erreichen eines Ergebnisses über die Erreichbarkeit des mobilen Kommunikationsendgerätes (MT) fortgesetzt wird, und
**daß** eine Information über die Erreichbarkeit des mobilen Kommunikationsendgerätes (MT) in der Kommunikationsanlage (PBX) gespeichert wird.

2. Verfahren nach Anspruch 1,
**dadurch gekennzeichnet,**
**daß** die Kommunikationsanlage (PBX) mit einer Basisstation (BS) verbunden ist und eine Datenübertragung zwischen der Kommunikationsanlage (PBX) und dem mobilen Kommunikationsendgerät (MT) über eine Luftschnittstelle zwischen der Basisstation (BS) und dem mobilen Kommunikationsendgerät (MT) erfolgt.

3. Verfahren nach Anspruch 2,
**dadurch gekennzeichnet,**
**daß** die Überprüfung, ob das mobile Kommunikationsendgerät (MT) aktuell erreichbar ist durch die Basisstation (BS) erfolgt.

4. Verfahren nach Anspruch 2 oder 3,
**dadurch gekennzeichnet,**
**daß** eine, die Nichterreichbarkeit des mobilen Kommunikationsendgerätes (MT) bezeichnende Information nach einem Anmelden des mobilen Kommunikationsendgerätes (MT) an der Basisstation (BS) gelöscht wird.

5. Verfahren nach Anspruch 2, 3 oder 4,
**dadurch gekennzeichnet,**
**daß** eine Datenübertragung zwischen der Basisstation (BS) und dem mobilen Kommunikationsendgerät (MT) gemäß dem DECT-Standard (Digital Enhanced Cordless Telecommunication) erfolgt.

6. Verfahren nach einem der vorhergehenden Ansprüche,
**dadurch gekennzeichnet,**
**daß** in Fällen, in denen das mobile Kommunikationsendgerät (MT) nicht erreichbar ist, an das mobile Kommunikationsendgerät (MT) adressierte Rufe an ein anderes Kommunikationsendgerät weitergeleitet werden.

7. Verfahren nach Anspruch 6,
**dadurch gekennzeichnet,**
**daß** ein Weiterleiten eines Rufes durch eine Aktivierung eines Leistungsmerkmals "Rufweiterleitung" der Kommunikationsanlage (PBX) erfolgt.

8. Verfahren nach einem der Ansprüche 1 bis 5,
**dadurch gekennzeichnet,**
**daß** in Fällen, in denen das mobile Kommunikationsendgerät (MT) nicht erreichbar ist, eine Verbindung mit einem, dem mobilen Kommunikationsendgerät (MT) zugeordneten Postfach der Kommunikationsanlage (PBX) eingerichtet wird.

## Claims

1. Method for setting up a connection between a communication system (PBX) and a mobile communication terminal (MT), wherein during the setting-up of the connection the communication system (PBX) performs a check as to whether the mobile communication terminal (MT) can be currently reached and in cases in which the mobile communication terminal (MT) can be currently reached, a connection is set up to it, **characterized in that** when the connection set up is terminated by a calling subscriber before the check is terminated, the check is continued until a result about the accessibility of the mobile communication terminal (MT) has been reached, and **in that** an information item about the accessibility of the mobile communication terminal (MT) is stored in the communication system (PBX).

2. Method according to Claim 1, **characterized in that** the communication system (PBX) is connected to a base station (BS) and a data transmission takes place between the communication system (PBX) and the mobile communication terminal (MT) via an air interface between the base station (BS) and the mobile communication terminal (MT).

3. Method according to Claim 2, **characterized in that** the check as to whether the mobile communication terminal (MT) can be currently reached is performed by the base station (BS).

4. Method according to Claim 2 or 3, **characterized in that** an information item designating the inaccessibility of the mobile communication terminal (MT) is deleted after the mobile communication terminal (MT) has registered at the base station (BS).

5. Method according to Claim 2, 3 or 4, **characterized in that** a data transmission between the base station (BS) and the mobile communication terminal (MT) takes place in accordance with the DECT (Digital Enhanced Cordless Telecommunication) standard.

6. Method according to one of the preceding claims, **characterized in that** in cases in which the mobile communication terminal (MT) cannot be reached, calls addressed to the mobile communication terminal (MT) are forwarded to another communication terminal.

7. Method according to Claim 6, **characterized in that** a call is forwarded by activation of a "call forwarding" feature of the communication system (PBX).

8. Method according to one of Claims 1 to 5, **characterized in that** in cases in which the mobile communication terminal (MT) cannot be reached, a connection to a mailbox, allocated to the mobile communication terminal (MT), of the communication system (PBX) is set up.

## Revendications

1. Procédé pour établir une liaison entre un dispositif de communication (PBX) et un terminal de communication mobile (MT), dans lequel, dans le cadré de l'établissement de la liaison, via le dispositif de communication (PBX), on procède à une vérification quant au fait de savoir si le terminal de communication mobile (MT) est actuellement accessible et, dans les cas dans lesquels le terminal de communication mobile (MT) est actuellement accessible, une liaison est établie avec ce dernier, **caractérisé en ce que**, dans le cas d'une interruption de l'établissement de la liaison par un abonné appelant avant la cessation de la vérification, la vérification se poursuit jusqu'à atteindre un résultat concernant l'accessibilité du terminal de communication mobile (MT), et **en ce qu'**une information concernant l'accessibilité du terminal de communication mobile (MT) est mémorisée dans le dispositif de communication (PBX).

2. Procédé selon la revendication 1, **caractérisé en ce que** le dispositif de communication (PBX) est relié à une station de base (BS) et une transmission de données est établie entre le dispositif de communication (PBX) et le terminal de communication mobile (MT) via une interface radio entre la station de base (BS) et le terminal de communication mobile (MT).

3. Procédé selon la revendication 2, **caractérisé en ce que** la vérification, concernant le fait de savoir si le terminal de communication mobile (MT) est actuellement accessible, a lieu via la station de base (BS).

4. Procédé selon la revendication 2 ou 3, **caractérisé en ce qu'**une information indiquant la non-accessibilité du terminal de communication mobile (MT) est effacée après une annonce de la présence du terminal de communication mobile (MT) à la station de base (BS).

5. Procédé selon la revendication 2, 3 ou 4, **caractérisé en ce qu'**une transmission de données s'établit entre la station de base (BS) et le terminal de communication mobile (MT) conformément à la norme DECT (Digital Enhanced Cordless Telecommunication).

6. Procédé selon l'une quelconque des revendications précédentes, **caractérisé en ce que**, dans des cas dans lesquels le terminal de communication mobile (MT) est inaccessible, des appels adressés au terminal de communication mobile (MT) sont automatiquement renvoyés à un autre terminal de communication.

7. Procédé selon la revendication 6, **caractérisé en ce que** le renvoi automatique d'un appel a lieu via une activation d'un "renvoi automatique d'appel" du dispositif de communication (PBX).

8. Procédé selon l'une quelconque des revendications 1 à 5, **caractérisé en ce que**, dans des cas dans lesquels le terminal de communication mobile (MT) est inaccessible, une liaison est établie avec une boîte à lettres électronique du dispositif de communication (PBX), attribuée au terminal de communication mobile (MT).
